# EUROPEAN PATENT APPLICATION

(11) **EP 1 014 013 A1**
(43) Date of publication of application: **28.06.2000**
(21) Application number: 99125221.4
(22) Date of filing: 17.12.1999
(51) Int. Cl.: F25B 1/00, F25B 41/06

(54) **Vapor compression type refrigeration cycle**

(30) Priority: 18.12.1998 JP 36063898
(71) Applicant: SANDEN CORPORATION, Isesaki-shi Gunma 372 (JP)
(72) Inventor: Komatsu, Shunji, c/o Sanden Corporation, Isesaki-shi, Gunma 372 (JP); Yamamoto, Kiyokazu, c/o Sanden Corporation, Isesaki-shi, Gunma 372 (JP)
(74) Representative: Prüfer, Lutz H., Dipl.-Phys.

(57) **Abstract**

In a vapor compression type refrigeration cycle (1) using carbon dioxide as a refrigerant, a superheat control valve (6) is connected between an evaporator (7) and an internal heat exchanger (4). The superheat control valve is for adjusting flow rate of a liquid phase part, supplied to the evaporator, of the refrigerant in accordance with a control signal to keep a degree of superheat of a gas phase part, supplied to a compressor (2), of the refrigerant. Thermistors (10, 11) detect temperatures of the gas phase part and an evaporated part, flowed out from the evaporator, of the refrigerant to produce a first and a second temperature signal, respectively. A temperature/pressure sensor (12) detects a condition of a radiated part, flowed out from a radiator (3), of the refrigerant to produce a refrigerant condition value. A selector (13) selects, as a selected signal, one of the first and the second temperature signals in accordance with the refrigerant condition value to supply the selected signal as the control signal to the superheat control valve.

## Description

### Background of the Invention:

The present invention relates to a vapor compression type refrigeration cycle, which is preferably used particularly as an air conditioner for vehicles such as cars.

In these days the prevention of earth warming by Freon gas has been demanded in a worldwide scale. In the field of a conventional vapor compression type refrigeration cycle using Freon as a refrigerant, a vapor compression type refrigeration cycle using, for example, CO₂ (carbon dioxide) is proposed as one of refrigerant de-Freon measures.

However, in the vapor compression type refrigeration cycle, since the carbon dioxide with a low critical point is used as a sealed refrigerant, there is an disadvantage that the coefficient of performance (hereinafter abbreviated as COP) has a smaller value as compared with a refrigeration cycle in which Freon with a higher critical point than that of the carbon dioxide is used as the sealed refrigerant. Therefore, it is a problem in the vapor compression type refrigeration cycle to increase the value of COP and improve the COP.

For improving the COP, a vapor compression type refrigeration cycle in previous technique uses an internal heat exchanger. More particularly, the vapor compression type refrigeration cycle includes a compressor for compressing a gas phase part of the carbon dioxide into a compressed part, a radiator for radiating heat from the compressed part into a radiated part, an evaporator for evaporating a liquid phase part of the refrigerant into an evaporated part, and an internal heat exchanger for heat-exchanging between the radiated part and the evaporated part to modify the radiated part into the liquid phase part and to modify the evaporated part into the gas phase part. The vapor compression type refrigeration cycle further includes a gas-liquid separator connected between the compressor and the internal heat exchanger for storing the carbon dioxide in a liquid phase.

In the refrigeration cycle, heat is exchanged by the internal heat exchanger between the radiated part of relatively high-temperature (e.g., 40 to 50°C) and the evaporated part of relatively low-temperature (e.g., 5°C to 10°C). In this event, the evaporated part is heated in the internal heat exchanger and is stored as the liquid phase in the gas-liquid separator. On the other hand, the radiated part is cooled in the internal heat exchanger and flows in the evaporator. As a result, the value of COP increases. Therefore, the COP can be improved.

Additionally, when this refrigeration cycle is used as a vehicle air conditioner, there is a strong demand for cost reduction, and to meet the demand the constituting of the circuit without using the gas-liquid separator has been studied. However, this circuit has no means for storing the refrigerant, which causes a problem that ability is remarkably deteriorated when a given amount of or more refrigerant leaks. Particularly, when the refrigeration cycle using no gas-liquid separator is used as a vehicle air conditioning system, a phenomenon unavoidably occurs in which refrigerant gradually leaks by vehicle vibration, and the circuit is requested to handle the phenomenon. Therefore, when the refrigeration cycle is constituted not to use the gas-liquid separator, it is essential to constitute a system whose ability is prevented from being deteriorated even when a slight refrigerant leakage occurs.

### Summary of the Invention:

It is therefore an object of the present invention to provide a vapor compression type refrigeration cycle in which it is unnecessary to include a gas-liquid separator.

It is another object of the present invention to provide a vapor compression type refrigeration cycle which can prevent ability from being deteriorated by refrigerant leakage.

Other objects of the present invention will become clear as the description proceeds.

A vapor compression type refrigeration cycle to which the present invention is applicable uses carbon dioxide as a refrigerant and includes a compressor for compressing a gas phase part of said refrigerant into a compressed part, a radiator for radiating heat from said compressed part into a radiated part, an evaporator for evaporating a liquid phase part of said refrigerant into an evaporated part, and an internal heat exchanger for heat-exchanging between said radiated part and said evaporated part to modify said radiated part into said liquid phase part and to modify said evaporated part into said gas phase part. The vapor compression type refrigeration cycle is characterized by further comprising a superheat control valve connected between said evaporator and said internal heat exchanger for adjusting flow rate of said liquid phase part in accordance with a control signal to keep a degree of superheat of said gas phase part, first detecting means for detecting a temperature of said gas phase part to produce a first temperature signal, second detecting means for detecting a temperature of said evaporated part to produce a second temperature signal, condition detecting means for detecting a condition of said radiated part to produce a refrigerant condition value, and selecting means connected to said superheat control valve and said first detecting, said second detecting, and said condition detecting means for selecting, as a selected signal, one of said first and said second temperature signals in accordance with said refrigerant condition value to supply said selected signal as said control signal to said superheat control valve.

It may be arranged that said control means comprises judging means connected to said condition detecting means and responsive to said refrigerant condition value for judging about whether or not said refrigerant condition value is in a predetermined range relating to said degree of superheat, first making means connected to said judging means and said switch for making said superheat control valve be connected to said first detecting means when said refrigerant condition value is in said predetermined range, and second making means connected to said judging means and said switch for making said superheat control valve be connected to said second detecting means when said refrigerant condition value is not in said predetermined range.

It may be arranged that said first and said second detecting means comprise thermistors which are responsive to said temperatures of said gas phase part and said evaporated part and are for producing electric signals as said first and said second temperature signals, respectively, said selecting means comprising a switch connected to said superheat control valve and selectively connected to one of said thermistors for making said superheat control valve be supplied as said control signal with one of said electric signals and switch control means connected to said switch and said condition detecting means for controlling operation of said switch in accordance with said refrigerant condition value.

It may be arranged that said first and said second detecting means comprise temperature sensitive cylinders which are responsive to said temperatures of said gas phase part and said evaporated part and are for producing pressure values as said first and said second temperature signals, respectively, said selecting means comprising a change-over valve connected to said superheat control valve and selectively connected to said temperature sensitive cylinders for making said superheat control valve be supplied as said control signal with one of said pressure values and valve control means connected to said change-over valve and said condition detecting means for controlling operation of said change-over valve in accordance with said refrigerant condition value.

It may be arranged that said refrigerant condition value is representative of pressure of said radiated part relative to temperature of said radiated part.

### Brief Description of the Drawing:

Fig. 1 is a circuit diagram of a vapor compression type refrigeration cycle according to a first embodiment of the present invention;
Fig. 2 is a flowchart for describing the control of the vapor compression type refrigeration cycle of Fig. 1;
Fig. 3 is a circuit diagram of the vapor compression type refrigeration cycle according to a second embodiment of the present invention; and
Fig. 4 is a flowchart for describing the control of the vapor compression type refrigeration cycle of Fig. 3.

### Description of the Preferred Embodiments:

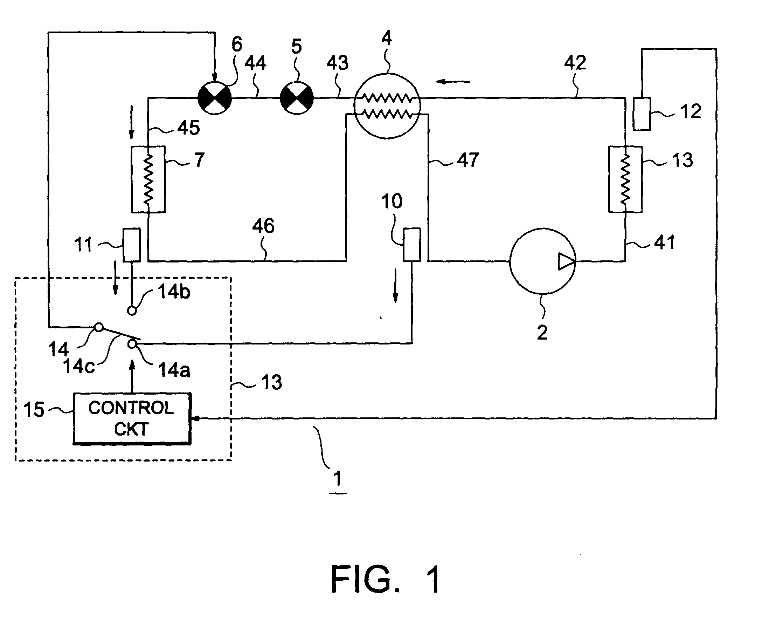

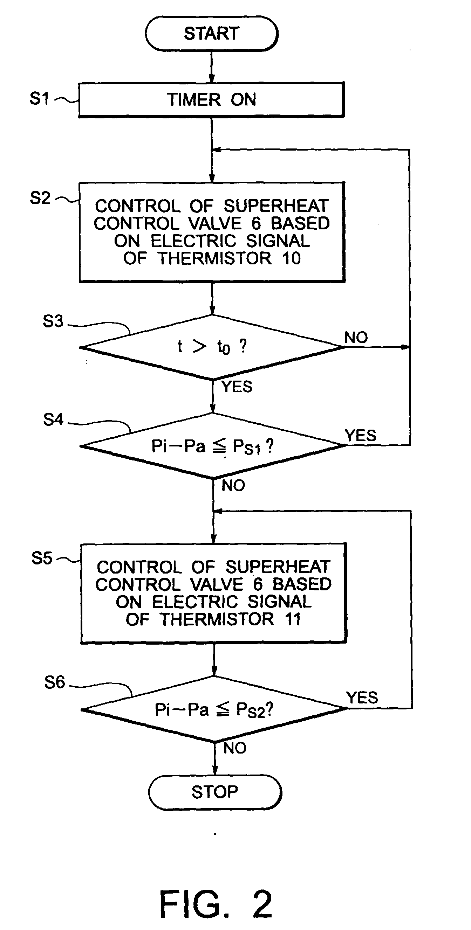

With reference to Figs. 1 and 2, description will be made as regards a vapor compression type refrigeration cycle according to a first embodiment of the present invention.

Referring to Fig. 1, the vapor compression type refrigeration cycle (hereinafter referred to simply as the refrigeration cycle) is designated by a reference numeral 1 and can be included in, for example, an air conditioning system mounted on vehicles such as a car. The refrigeration cycle 1 uses CO₂ (carbon dioxide) as a refrigerant and includes a compressor 2 for compressing a gas phase part of said refrigerant into a compressed part, a radiator or a gas cooler 3 for radiating heat from said compressed part into a radiated part, an evaporator 7 for evaporating a liquid phase part of said refrigerant into an evaporated part, and an internal heat exchanger 4 for heat-exchanging between said radiated part and said evaporated part to modify said radiated part into said liquid phase part and to modify said evaporated part into said gas phase part. It should be noted that the refrigeration cycle 1 does not use a liquid reservoir or a gas-liquid separator for storing the refrigerant.

The refrigeration cycle 1 further includes a high pressure control valve 5 and a superheat control valve 6. The high pressure control valve 5 is disposed in the subsequent stage of the internal heat exchanger 4 and is for controlling the pressure of the refrigerant from the gas cooler 3. The superheat control valve 6 is disposed in the subsequent stage of the high pressure control valve 5 and is for adjusting flow rate of the refrigerant flowing into the evaporator 7 from the gas cooler 3 so that the superheat of the refrigerant reaches a predetermined value on the side of the inlet of the compressor 2. In other words, the superheat control valve 6 is connected between the evaporator 7 and the internal heat exchanger 4 and is for adjusting the flow rate of the liquid phase part of the refrigerant in accordance with a control signal to keep a degree of superheat of the gas phase par.

In the refrigeration cycle 1, the compressor 2 and the gas cooler 3 are connected via a piping 41. The gas cooler 3 and the internal heat exchanger 4 are connected via a piping 42. The internal heat exchanger 4 and the high pressure control valve 5 are connected via a piping 43. The high pressure control valve 5 and the superheat control valve 6 are connected via a piping 44. The superheat control valve 6 and the evaporator 7 are connected via a piping 45. The evaporator 7 and the internal heat exchanger 4 are connected via a piping 46. The internal heat exchanger 4 and the compressor 2 are connected via a piping 47.

Moreover, the refrigeration cycle 1 is provided with a first thermistor 10, a second thermistor 11, a temperature/pressure sensor 12, and a change-over selector 13 in the manner which will presently be described.

The first thermistor 10 is for detecting the temperature of the refrigerant flowing out of the evaporator 7 in the position of the outlet of the internal heat exchanger 4. More particularly, the first thermistor 10 is disposed in contact with the piping 47 and is responsive to the temperature of the gas phase part of the refrigerant for producing a first temperature signal as an electric signal. Therefore, the first thermistor 10 is referred to as a first detecting arrangement for detecting the temperature of the gas phase part.

The second thermistor 11 is for detecting the refrigerant temperature of the outlet of the evaporator 7. More particularly, the second thermistor 11 is disposed in contact with the piping 46 and is responsive to a temperature of the evaporated part of the refrigerant for producing a second temperature signal as the electric signal. Therefore, the second thermistor 11 is referred to as a second detecting arrangement for detecting the temperature of the evaporated part.

The temperature/pressure sensor 12 is for detecting the temperature and pressure of the refrigerant of the outlet of the gas cooler 3. More particularly, the temperature/pressure sensor 12 is disposed in contact with the piping 42 and detecting a condition of the radiated part of the refrigerant to produce a refrigerant condition value representative of the temperature and the pressure of the radiated part. Therefore, the temperature/pressure sensor 12 is referred to as a condition detecting arrangement.

The change-over selector 13 is for selecting either of the refrigerant temperature detection value from the first temperature detecting means 10 and the refrigerant temperature detection value from the second temperature detecting means 11 based on the detection value of the temperature/pressure sensor 12. More particularly, the change-over selector 13 is connected to the superheat control valve, the first thermistor 10, the second thermistor 11, and the temperature/pressure sensor 12 and is for selecting, as a selected signal, one of the first and the second temperature signals in accordance with the refrigerant condition value to supply the selected signal as the control signal to the superheat control valve 6.

The compressor 2 inhales the carbon dioxide having a gas phase state via the piping 47, compresses the inhaled the carbon dioxide to provide its critical pressure or more, and discharges the carbon dioxide therefrom. The gas cooler 3 changes heat between the carbon dioxide compressed to the critical pressure or more by the compressor 2 and outside fluids such as outside air, and radiates heat. The internal heat exchanger 4 exchanges heat between the carbon dioxide flowing out of the gas cooler 3 and the carbon dioxide flowing out of the evaporator 7. The high pressure control valve 5 controls the pressure on the side of the piping 43 of the internal heat exchanger 4 in accordance with the temperature of the carbon dioxide refrigerant on the side of the piping 43 of the internal heat exchanger 4. The superheat control valve 6 adjusts the flow rate of the carbon dioxide flowing into the evaporator 7 so that the degree of superheat of the carbon dioxide on the side of the inlet of the compressor 2 reaches a predetermined value. More particularly, the superheat control valve 6 includes a solenoid valve and opens/closes the solenoid valve based on the detection signal outputted from the change-over selector 13 detailed later so that the degree of superheat on the side of the inlet of the compressor 2 reaches the predetermined value in the range of 0-20K.

The superheat control valve 6 adjusts the open degree of the solenoid valve so that the detected temperature inputted via the change-over selector 13 from the first thermistor 10 or the second thermistor 11 corresponds to a sum of the above-described superheat and the evaporation temperature of the carbon dioxide. For example, when the evaporation temperature of the carbon dioxide in the evaporator 7 is 0°C, the superheat is set to a certain value, for example, 5K in the range of 0-20K as described above. Therefore, the open degree of the solenoid valve (not shown) of the superheat control valve 6 is adjusted so that the detected temperature of the first thermistor 10 or the second thermistor 11 reaches 5°C (= 0°C + 5K). To describe this in detail, when the superheat is higher than the set value, and the detected temperature of the first thermistor 10 or the second thermistor 11 is 8°C, the open degree of the solenoid valve (not shown) of the superheat control valve 6 is adjusted to be large. As a result, the amount of the refrigerant passing through the evaporator 7 increases, and the detected temperature of the first thermistor 10 or the second thermistor 11 lowers. On the other hand, when the superheat is lower than the set value, and the detected temperature of the first thermistor 10 or the second thermistor 11 is 2°C, the open degree of the solenoid valve (not shown) of the superheat control valve 6 is adjusted to be small. As a result, the amount of the refrigerant passing through the evaporator 7 decreases, and the detected temperature of the first thermistor 10 or the second thermistor 11 rises.

The change-over selector 13 comprises a change-over switch 14 and a control circuit 15 and selects either one of the detection signals from the first and the second thermistors 10 and 11 to transmit an output to the superheat control valve 6. The change-over switch 14 comprises a first fixed terminal 14a connected to the first thermistor 10, a second fixed terminal 14b connected to the second thermistor 11, and a movable contact 14c connected to the superheat control valve 6. The movable contact is selectively connected to one of the first and the second thermistors 10 and 11 and is for making the superheat control valve 6 be supplied as the control signal with one of the first and the second electric signals. Additionally, at the start of the refrigeration cycle 1, the movable contact 14c is connected to the first terminal 14a. Therefore, the open degree of the solenoid valve (not shown) of the superheat control valve 6 is adjusted in accordance with the detected temperature of the first thermistor 10 so that the temperature reaches the predetermined value.

The control circuit 15 stores a plurality of temperatures in the piping 42 and a plurality of pressures corresponding to the temperatures in a normal condition in which the refrigerant is sealed in the refrigeration cycle 1 with an adequate value. Furthermore, the values of temperature Ta detected by the temperature/pressure sensor 12 and the corresponding pressure Pa are supplied to the control circuit 15. Subsequently, in the control circuit 15, stored pressure Pi corresponding to stored temperature Ti having the same value as that of the detected temperature Ta, and detected pressure Pa are compared. Here, when (Pi - Pa) exceeds a predetermined value Ps, that is, when (Pi - Pa) > Ps, the control circuit 15 judges that the sealed refrigerant amount of the refrigeration cycle lowers than the adequate value, and transmits a change-over control signal to the change-over switch 14. So that, the connection of the switch S of the change-over switch 14 is changed over to the terminal 14b from 14a. As a result, the open degree of the solenoid valve (not shown) of the superheat control valve 6 is adjusted in accordance with the detected temperature of the second thermistor 11, instead of the detected temperature of the first thermistor 10, so that the temperature reaches the predetermined value. The control circuit 15 will be referred to as a switch control arrangement for controlling operation of the change-over switch 14 in accordance with the refrigerant condition value.

Here, the temperatures in the piping 42 and the pressures corresponding to the temperatures in the normal condition will concretely be described. When the temperature is 25°C, the pressure is 120Kg/cm². When the temperature is 30°C, the pressure is 125Kg/cm².

In the refrigeration cycle 1 constituted as described above, the carbon dioxide as the refrigerant is compressed to provide its critical pressure or more by the compressor 2, and discharged therefrom. This the carbon dioxide flows into the gas cooler 3 via the piping 41, and then circulates through the internal heat exchanger 4, high pressure control valve 5, superheat control valve 6, evaporator 7, internal heat exchanger 4, and compressor 2 in that order. Here, the carbon dioxide discharged from the compressor 2 is radiated to outside air, cooled down to 40-50°C by the gas cooler 3, subjected to the control of the pressure and flow rate by the high pressure control valve 5 and the superheat control valve 6, changed to a liquid phase state, and flows into the evaporator 7. Subsequently, the carbon dioxide is evaporated in the evaporator 7, and cools the inside of the car by taking heat from the fluid around the evaporator 7. Furthermore, the internal heat exchanger 4 performs the heat exchange between a relatively low-temperature the carbon dioxide from the evaporator 7 and a relatively high-temperature the carbon dioxide from the gas cooler 3.

Therefore, in the refrigeration cycle 1, since the carbon dioxide from the outlet of the evaporator 7 has a raised temperature in the internal heat exchanger 4 and is supplied to the compressor 2, the detected temperature of the thermistor 10 for detecting the refrigerant temperature in the piping 47 is constantly higher than the detected temperature of the thermistor 11 for detecting the refrigerant temperature in the piping 46. Then, in the refrigeration cycle 1, the refrigerant flowing into the evaporator 7 is cooled by the internal heat exchanger 4. As a result, the COP value increases. Therefore, the COP can be improved.

Referring to Fig. 2 in addition, the change-over selector 13 has operation which will be described below. When the refrigeration cycle 1 starts, a timer starts (first step S1). In this case, the movable contact 14c of the change-over switch 14 is connected to the first fixed terminal 14a on the side of the first thermistor 10. Therefore, the open degree of the solenoid valve (not shown) of the superheat control valve 6 is adjusted based on the first temperature signal from the first thermistor 10, thereby controlling the refrigerant flow rate to the evaporator 7 (second step S2). Subsequently, judgement is made about whether or not a predetermined time t₀ elapses from the start of the refrigeration cycle 1 (third step S3). Here, when it is determined that the predetermined time t₀ does not elapse, the second step S2 is continued.

On the other hand, when it is determined that the predetermined time t₀ elapses, the stored pressure Pi corresponding to the stored temperature Ti having the same value as that of the detected temperature Ta, and the detected pressure Pa are compared, and judgement is made about whether or not (Pi - Pa) exceeds a first predetermined value P_{S1} (fourth step S4). When it is judged that (Pi - Pa) does not exceed the first predetermined value P_{S1}, that is, when it is judged that the sealed refrigerant amount to the refrigeration cycle 1 is within a first allowable value, the connection of the movable contact 14c to the first fixed terminal 14a on the side of the thermistor 10 is maintained. Therefore, the control of the superheat control valve 6 based on the signal from the first thermistor 10 is continued (second step S2). On the other hand, when it is judged that (Pi - Pa) exceeds the first predetermined value P_{S1}, that is, when it is judged that the sealed refrigerant amount to the refrigeration cycle 1 is less than the first allowable value, the control circuit 15 transmits a change-over control signal to the change-over switch 14, and the connection of the movable contact 14c of the change-over switch 14 is changed to the second fixed terminal 14b from the first fixed terminal 14a. As a result, the open degree of the solenoid valve (not shown) of the superheat control valve 6 is adjusted based on the detected temperature of the second thermistor 11 instead of the detected temperature of the first thermistor 10 (fifth step S5).

Subsequently, judgment is made about whether or not (Pi - Pa) exceeds a second predetermined value P_{S2} (sixth step S6). Here, there is a relation of P_{S1} < P_{S2}. Subsequently, when it is judged that (Pi - Pa) does not exceed the second predetermined value P_{S2}, that is, when it is judged that the sealed refrigerant amount to the refrigeration cycle 1 is less than the first allowable value and equal to or more than the second allowable value, the connection of the movable contact 14c to the second fixed terminal 14b on the side of the second thermistor 11 is maintained. Therefore, the control of the superheat control valve 6 based on the signal from the second thermistor 11 is continued (fifth step S5). On the other hand, when it is judged that (Pi - Pa) exceeds the second predetermined value P_{S2}, that is, when it is judged that the sealed refrigerant amount to the refrigeration cycle 1 is less than the second allowable value, the control circuit 15 transmits a stop signal to an operation control circuit (not shown) and the operation of the refrigeration cycle 1 is stopped. This can avoid disadvantages caused when the refrigerant excessively leaks from the refrigeration cycle 1, such as the sticking of the compressor 2. On carrying out the third and the sixth steps S3 and S6, the change-over selector 13 will be operable as a judging arrangement. On carrying out the fifth step S5, the change-over selector 13 will be operable as a first making arrangement. On carrying out the second step S2, the change-over selector 13 will be operable as a second making arrangement.

Here, when the above-described change-over control to the second thermistor 11 from the first thermistor 10 is not performed and when the superheat control valve 6 is adjusted only by the first thermistor 10, the leakage of the refrigerant from the refrigeration cycle 1 immediately results in a decrease of the amount of the refrigerant flowing into the compressor 2. As a result, the discharge pressure of the compressor 2 is lowered. Therefore, the refrigerating ability of the refrigeration cycle 1 is deteriorated.

On the other hand, in the above-described first embodiment, since the control circuit 15 transmits the change-over control signal to the change-over switch 14, the first thermistor 10 is changed over to the second thermistor 11 to make the detected temperature for the adjustment of the superheat control valve 6 be shifted to a substantially low side. Specifically, the refrigerant temperature in the piping 46 connected to the second thermistor 11 is constantly lover than the refrigerant temperature in the piping 47 connected to the first thermistor 10. Therefore, when the change-over to the second thermistor 11 from the first thermistor 10 is performed, the detected temperature data to be inputted to the superheat control valve 6 shifts to lower values. Thereby, the adjustment is performed such that the open degree of the solenoid valve (not shown) of the superheat control valve 6 is reduced.

Thereby, the amount of the refrigerant flowing into the evaporator 7 is decreased, and the proportion of liquid phase in the piping 46 is reduced. As a result, the discharge pressure of the compressor 2 rises, and the refrigerating ability of the refrigeration cycle 1 can be prevented from being deteriorated.

As described above, according to the first embodiment, the deterioration of the refrigerating ability caused by the refrigerant leakage can be prevented without disposing the gas-liquid separator in the refrigeration cycle. Moreover, since the gas-liquid separator is unnecessary, manufacture cost can be reduced. Furthermore, the present embodiment can preferably be applied to the refrigeration system for car air conditioning in which the refrigerant leakage is easily generated by vibration.

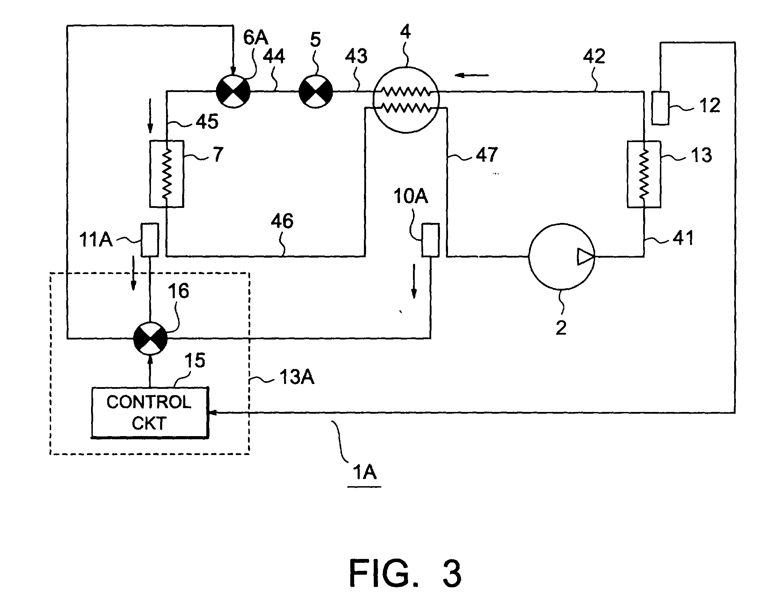

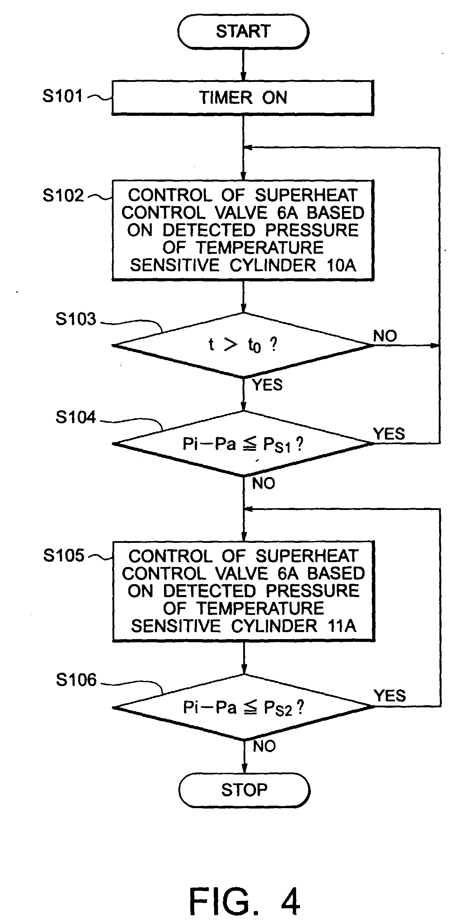

With reference to Figs. 3 and 4, the description will be made as regard a vapor compression type refrigeration cycle according to a second embodiment of the present invention. Similar parts are designated by like reference numerals.

Referring to Fig. 3, the refrigeration cycle is designated by a reference numeral 1A and is similar to the above-described refrigeration cycle 1 of Fig. 1 in basic constitution thereof. The refrigeration cycle 1A includes a superheat control valve 6A in place of the superheat control valve 6 in Fig. 1. The superheat control valve 6A is connected between the evaporator 7 and the internal heat exchanger 4 and is for adjusting the open degree thereof in accordance with pressure which is supplied to the superheat control value 6A. In place of the thermistors, the refrigeration cycle 1A is provided with first and second temperature sensitive cylinders 10A and 11A which are known in the art. The first and the second temperature sensitive cylinders 10A and 11A are responsive to the temperatures of the gas phase part and the evaporated part of the refrigerant and are for producing pressure values as the first and the second temperature signals, respectively. The pressure values are selectively supplied to the superheat control valve 6A in the manner which will later be described.

Moreover, in the refrigeration cycle 1A, a change-over selector 13A is constituted using a change-over valve 16 instead of the change-over switch 14 in Fig. 1. The change-over valve 16 supplies either of the pressure values or the detected pressures of the first and the second temperature sensitive cylinders 10A and 11A to the superheat control valve 6A in accordance with the change-over control signal from the control circuit 15. Furthermore, the superheat control valve 6A is of a mechanical type to mechanically adjust the open degree of the valve in accordance with either of the detected pressures of the first and the second temperature sensitive cylinders 10A and 11A.

Referring to Fig. 4 in addition, when the refrigeration cycle 1A starts, a timer starts (first step S101). In this case, the change-over valve 16 supplies the detected pressure from the first temperature sensitive cylinder 10A to the superheat control valve 6A. Subsequently, the open degree of the superheat control valve 6A is adjusted based on the detected pressure of the first temperature sensitive cylinder 10, thereby controlling the refrigerant flow rate to the evaporator 7 (second step S102). Subsequently, it is judged whether or not a predetermined time t₀ elapses from the start of the refrigeration cycle 1A (third step S103). Here, when it is determined that the predetermined time t₀ does not elapse, the second step S102 is continued.

On the other hand, when it is determined that the predetermined time t₀ elapses, the detected pressure Pa is compared with the stored pressure Pi corresponding to the stored temperature Ti having the same value as that of the detected temperature Ta. Namely, judgement is made about whether or not (Pi - Pa) exceeds a first predetermined value P_{S1} (fourth step S104). Here, when it is judged that (Pi - Pa) does not exceed the first predetermined value P_{S1}, that is, when it is judged that the sealed refrigerant amount to the refrigeration cycle 1A is within a first allowable value, the supply of the pressure detected by the first temperature sensitive cylinder 10A to the superheat control valve 6A is maintained. Therefore, the opening/closing control of the superheat control valve 6A based on the detected pressure of the first temperature sensitive cylinder 10A is continued (second step S102). On the other hand, when it is judged that (Pi - Pa) exceeds the first predetermined value P_{S1}, that is, when it is judged that the sealed refrigerant amount to the refrigeration cycle 1A is less than the first allowable value, the control circuit 15 transmits a change-over control signal to the change-over valve 16. The pressure detected by the second temperature sensitive cylinder 11A is supplied to the superheat control valve 6A. As a result, the open degree of the superheat control valve 6A is adjusted based on the detected pressure of the second temperature sensitive cylinder 11A instead of the detected pressure of the first temperature sensitive cylinder 10A (fifth step S105).

Subsequently, judgement is made about whether or not (Pi - Pa) exceeds a second predetermined value P_{S2} (sixth step S106). Here, there is a relation of P_{S1} < P_{S2}. Subsequently, when it is judged that (Pi - Pa) does not exceed the second predetermined value P_{S2}, that is, when it is judged that the sealed refrigerant amount to the refrigeration cycle 1A is less than the first allowable value and equal to or more than the second allowable value, the supply of the pressure detected by the second temperature sensitive cylinder 11A to the superheat control valve 6A is maintained. Therefore, the opening/closing control of the superheat control valve 6A based on the pressure detected by the second temperature sensitive cylinder 11A is continued (fifth step S105). On the other hand, when it is judged that (Pi - Pa) exceeds the second predetermined value P_{S2}, that is, when it is judged that the sealed refrigerant amount to the refrigeration cycle 1A is less than the second allowable value, the control circuit 15 transmits a stop signal to the operation control circuit (not shown) and the operation of the refrigeration cycle 1A is stopped. This can avoid disadvantages caused when the refrigerant excessively leaks from the refrigeration cycle 1A, such as the sticking of the compressor 2. On carrying out the third and the sixth steps S103 and S106. the change-over selector 13 will be operable as the judging arrangement. On carrying out the fifth step S105. the change-over selector 13 will be operable as the first making arrangement. On carrying out the second step S102, the change-over selector 13 will be operable as the second making arrangement.

As described above, even in the second embodiment, the effect similar to that of the first embodiment can be obtained. Specifically, the deterioration of the refrigerating ability caused by the refrigerant leakage can be prevented without disposing the gas-liquid separator in the refrigeration cycle. Moreover, since the gas-liquid separator is unnecessary, the manufacture cost can be reduced. Furthermore, the present embodiment can preferably be applied to the refrigeration system for car air conditioning in which the refrigerant leakage is easily generated by vibration.

Therefore, there can be provided the vapor compression type refrigeration cycle in which, by constituting the circuit without using the gas-liquid separator, the cost reduction is realized, and the ability deterioration with the refrigerant leakage can be prevented.

## Claims

1. A vapor compression type refrigeration cycle (1) using carbon dioxide as a refrigerant and including a compressor (2) for compressing a gas phase part of said refrigerant into a compressed part, a radiator (3) for radiating heat from said compressed part into a radiated part, an evaporator (7) for evaporating a liquid phase part of said refrigerant into an evaporated part, and an internal heat exchanger (4) for heat-exchanging between said radiated part and said evaporated part to modify said radiated part into said liquid phase part and to modify said evaporated part into said gas phase part, characterized by further comprising:
a superheat control valve (6, 6A) connected between said evaporator and said internal heat exchanger for adjusting flow rate of said liquid phase part in accordance with a control signal to keep a degree of superheat of said gas phase part.

2. A vapor compression type refrigeration cycle as claimed in claim 1, comprising
first detecting means (10) for detecting a temperature of said gas phase part to produce a first temperature signal; and
second detecting means (11) for detecting a temperature of said evaporated part to produce a second temperature signal.

3. A vapor compression type refrigeration cycle as claimed in claim 1 or 2, comprising
condition detecting means (12) for detecting a condition of said radiated part to produce a refrigerant condition value.

4. A vapor compression type refrigeration cycle as claimed in claim 3, comprising
selecting means (13) connected to said superheat control valve and said first detecting means, said second detecting means, and said condition detecting means for selecting, as a selected signal, one of said first and said second temperature signals in accordance with said refrigerant condition value to supply said selected signal as said control signal to said superheat control valve.

5. A vapor compression type refrigeration cycle as claimed in claim 3 or 4, wherein said control means comprises:
judging means (13) connected to said condition detecting means and responsive to said refrigerant condition value for judging about whether or not said refrigerant condition value is in a predetermined range relating to said degree of superheat;
first making means (13) connected to said judging means and said switch for making said superheat control valve be connected to said first detecting means when said refrigerant condition value is in said predetermined range; and
second making means (13) connected to said judging means and said switch for making said superheat control valve be connected to said second detecting means when said refrigerant condition value is not in said predetermined range.

6. A vapor compression type refrigeration cycle as claimed in one of claims 2 to 5, wherein said first and said second detecting means comprise thermistors (10, 11) which are responsive to said temperatures of said gas phase part and said evaporated part and are for producing electric signals as said first and said second temperature signals, respectively.

7. A vapor compression type refrigeration cycle as claimed in one of claims 4 to 6, wherein said selecting means (13) comprises:
a switch (14) connected to said superheat control valve (6, 6A) and selectively connected to one of said thermistors for making said superheat control valve (6, 6A) be supplied as said control signal with one of said electric signals; and
switch control means (15) connected to said switch (14) and said condition detecting means (12) for controlling operation of said switch (14) in accordance with said refrigerant condition value.

8. A vapor compression type refrigeration cycle as claimed in one of claims 2 to 7, wherein said first and second detecting means comprise temperature sensitive cylinders (10A,11A) which are responsive to said temperatures of said gas phase part and said evaporated part and are for producing pressure values as said first and said second temperature signals, respectively,

9. A vapor compression type refrigeration cycle as claimed in one of claims 4 to 8, wherein said selecting means (13) comprises:
a change-over valve (16) connected to said superheat control valve (6, 6A) and selectively connected to said tempereature sensitive cylinders for making said superheat control valve (6, 6A) be supplied as said control signal with one of said pressure values; and
valve control means (15) connected to said change-over valve (16) and said condition detecting means (12) for controlling operation of said change-over valve (16) in accordance with said refrigerant condition value.

10. A vapor compression type refrigeration cycle as claimed in any one of claims 1 through 9, wherein said refrigerant condition value is representative of pressure of said radiated part relative to temperature of said radiated part.
